# FASCICULE DE BREVET EUROPEEN

(11) **EP 2 435 750 B1**
(45) Date de publication et mention de la délivrance du brevet: **10.07.2013**
(21) Numéro de dépôt: 10727766.7
(22) Date de dépôt: 07.05.2010
(51) Int. Cl.: F17C 13/12

(54) **DISPOSITIF DE SECURITE POUR GAZ SOUS PRESSION**
SICHERHEITSVORRICHTUNG FÜR UNTER DRUCK STEHENDES GAS
SAFETY DEVICE FOR PRESSURIZED GAS

(30) Priorité: 27.05.2009 FR 0953468
(43) Date de publication de la demande: 04.04.2012
(73) Titulaire: L'Air Liquide Société Anonyme pour l'Etude et l'Exploitation des Procédés Georges Claude, 75007 Paris (FR)
(72) Inventeur: HASANOV, Vladimir, F-92500 Rueil-Malmaison (FR); JALLAIS, Simon, F-92370 Chaville (FR); PIERQUIN, Joseph, F-67120 Molsheim (FR); PISOT, Philippe, F-95290 L'Isle Adam (FR); GERARD, Sylvain, F-92210 Saint Cloud (FR); CHALLIOL, Hervé, F-91190 Gif sur Yvette (FR); MORAINVILLE, Alexandre, F-94500 Champigny sur Marne (FR)
(74) Mandataire: De Cuenca, Emmanuel Jaime
(86) Numéro de dépôt international: PCT/FR2010/050884
(87) Numéro de publication internationale: WO 2010/136692

(56) Documents cités:
- FR-A1- 2 725 008
- FR-A1- 2 766 554
- GB-A- 579 841
- US-A- 2 557 199

## Description

La présente invention concerne un dispositif de sécurité pour gaz sous pression.

L'invention concerne plus particulièrement un dispositif de sécurité permettant d'éviter l'explosion d'un stockage de gaz ou d'une conduite véhiculant du gaz, notamment du gaz inflammable tel que de l'hydrogène.

L'invention concerne ainsi un dispositif de sécurité formant une soupape de libération d'un gaz sous pression en cas de situation dangereuse, comprenant un corps définissant un canal d'écoulement de gaz s'étendant selon une direction longitudinale entre une première extrémité amont destinée à être mise en contact avec une source de gaz sous pression et une seconde extrémité aval destinée à être mis en contact avec l'atmosphère extérieure, le dispositif comprenant un bouchon situé sur le canal pour empêcher l'écoulement du gaz entre l'extrémité amont et l'extrémité aval en situation normale, le bouchon étant conformé pour libérer le passage pour le gaz en cas de situation dangereuse lorsqu'il est soumis à un pression et/ou une température excédant un seuil déterminé.

Les bouteilles stockant de l'hydrogène utilisées dans des applications mobiles (véhicules) sont généralement équipées d'un dispositif permettant de vider le contenu gazeux de la bouteille si celle-ci est prise dans un feu, pour éviter ainsi son éclatement. Ce dispositif de sécurité utilise généralement un fusible thermique (par exemple un eutectique métallique) qui fond sous l'action de la température du feu de façon à créer une fuite de gaz contrôlée qui vide la bouteille et évite ainsi son éclatement. Dans de nombreux cas d'incendie, à l'ouverture du fusible, l'hydrogène s'enflamme et crée une flamme de grande longueur à l'extérieur de la bouteille.

Dans certains cas, l'ouverture du fusible évacue l'hydrogène mais ce dernier ne s'enflamme pas. L'hydrogène se mélange alors à l'air ambiant en formant un nuage dont le volume peut être important. Un tel nuage de gaz inflammable est susceptible d'exploser ce qui peut être particulièrement dangereux dans des configurations confinées et obstruées (par exemple des parkings souterrains ou des tunnels). A ce titre, il peut être préférable de former une flamme (même de grande longueur) plutôt qu'un nuage de gaz. En effet, les effets associés à une flamme (rayonnement notamment) peuvent être préférés à ceux d'une explosion d'un nuage de gaz.

Les documents FR 2 725 008 consideré comme représentant l'art antérieur le plus proche, et US 2,557,199 décrivent des systèmes de sécurité qui assurent une inflammation de gaz libéré via un moyen d'allumage de type électrique ou catalytique.

Un but de l'invention est de proposer un dispositif de sécurité qui, lorsqu'il est activé pour libérer le gaz, favorise la création d'une flamme lors de la vidange du gaz (en particulier pour l'hydrogène).

A cette fin, le dispositif selon l'invention, par ailleurs conforme à la définition générique qu'en donne le préambule ci-dessus, est essentiellement caractérisé en ce que d'amont en aval, le canal comprend deux portions d'écoulement adjacentes respectivement amont et aval dont les dimensions transversales respectives (d, D) sont différentes, le rapport D/d entre la dimension transversale D de la portion aval et la dimension transversale d de la portion amont étant compris entre 1,4 et 11; et en ce que la jonction entre les deux portions adjacentes forme une discontinuité dans la dimension transversale du canal et en ce que le rapport L/D entre la longueur L de la portion aval et la dimension transversale D de cette portion aval est compris entre 15 et 100.

Par ailleurs, des modes de réalisation de l'invention peuvent comporter l'une ou plusieurs des caractéristiques suivantes :
- le rapport D/d entre la dimension transversale D de la portion aval et la dimension transversale de la portion amont est compris entre 1,5 et 10, et de préférence compris entre 1,8 et 2,2,
- le rapport L/D entre la longueur L de la portion aval et la dimension transversale D de cette seconde portion aval est compris entre 20 et 60 et de préférence entre 38 et 42,
- l'extrémité amont de la portion amont est destinée à être mise en contact avec une source de gaz sous pression,
- l'extrémité aval de la portion aval est destinée à être mis en contact avec l'atmosphère,
- les dimensions transversales respectives (d, D) des deux portions sont les diamètres ou les diamètres moyens respectifs desdites portions,
- au moins une partie de la portion aval comporte une réserve de gaz enrichi en oxygène par rapport à l'atmosphère, ladite réserve étant maintenue dans la portion aval par au moins un organe de maintien tel qu'une membrane; l'organe de maintien étant conformé pour libérer le passage pour le gaz et permettre le mélange avec le gaz enrichi de la réserve lorsqu'il est soumis à un pression et/ou une température excédant un seuil déterminé,
- la portion aval comporte, en amont de l'extrémité aval, au moins un orifice assurant une communication entre la portion aval et l'atmosphère extérieur, pour former un système d'aspiration spontané d'air en cas de circulation de gaz sous pression provenant d'une source,
- le corps définissant le canal est formé d'aux moins deux pièces détachables,

L'invention concerne également un récipient de gaz sous pression, notamment de gaz inflammable contenant de l'hydrogène, comportant au moins un dispositif de sécurité conforme à l'une quelconque des caractéristiques ci-dessus ou ci-après.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe longitudinale et schématique illustrant la structure et le fonctionnement d'un dispositif de sécurité appliqué à un récipient de stockage,
- la figure 2 représente une vue en coupe longitudinale et schématique illustrant un deuxième exemple de réalisation du dispositif de sécurité selon l'invention,
- la figure 3 représente une vue en coupe longitudinale illustrant un exemple de structure du dispositif de sécurité selon l'invention.

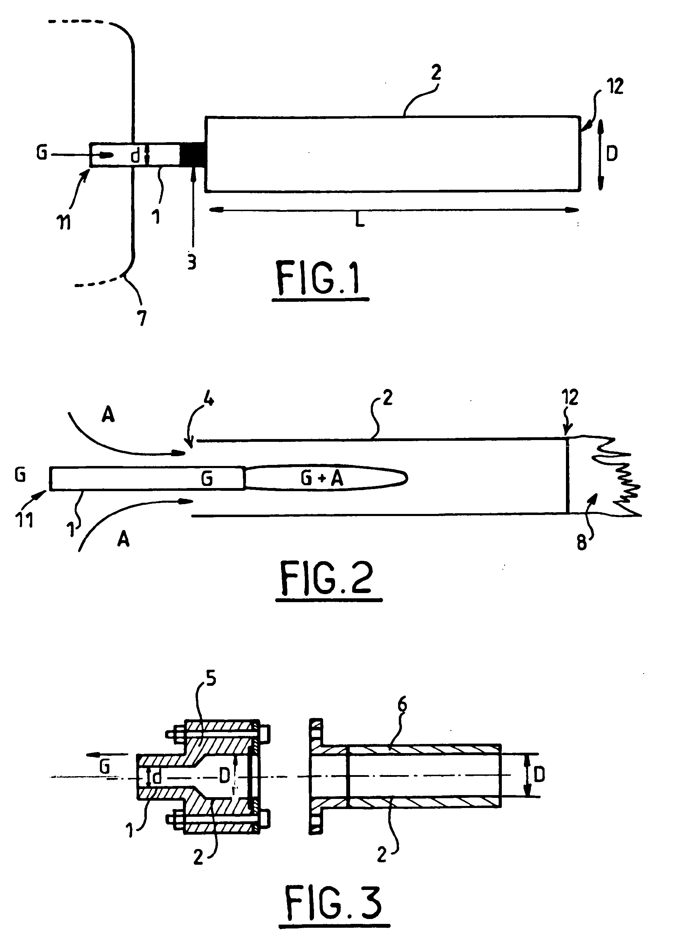

L'exemple de dispositif de sécurité illustré à la figure 1 comprend un corps définissant un canal 1, 2 d'écoulement de gaz s'étendant selon une direction longitudinale entre une première extrémité amont 11 et une seconde extrémité aval 12. L'extrémité amont 11 est en contact avec le gaz G sous pression. L'extrémité aval 12 est quant à elle en contact avec l'atmosphère extérieure.

Le dispositif de sécurité peut être monté sur tout type de stockage de gaz (récipient sous pression, bouteille, conduit véhiculant du gaz...). Le dispositif de sécurité peut être monté directement sur le stockage 7 ou sur une pièce auxiliaire telle qu'un robinet de bouteille ou une valve ou tout autre organe de contrôle du gaz sous pression.

Classiquement, le dispositif comprend un bouchon 3 situé sur le canal 1, 2 pour empêcher l'écoulement du gaz entre l'extrémité amont 11 et l'extrémité aval 12 en situation normale. Le bouchon 3 peut comprendre au moins l'un parmi : un diaphragme, un fusible eutectique ou tout autre système approprié formant une barrière pour le gaz en dessous d'un seuil de pression et/ou de température.

Classiquement, le bouchon 3 est conformé pour libérer le passage pour le gaz en cas de situation dangereuse, par exemple lorsqu'il est soumis à un pression et/ou une température excédant un seuil déterminé.

Selon une particularité avantageuse, d'amont en aval, le canal 1, 2 comprend deux portions d'écoulement adjacentes respectivement amont 1 et aval 2 dont les dimensions transversales respectives d, D sont différentes et définies comme suit : le rapport D/d entre la dimension transversale D de la portion aval 2 et la dimension transversale d de la portion amont 1 est compris entre 1,4 et 11.

Le rapport D/d entre la dimension transversale D de la portion aval 2 et la dimension transversale d de la portion amont 1 est plus préférentiellement compris entre 1,5 et 10 et encore plus préférentiellement compris entre 1,9 et 2,2. Par exemple, le rapport D/d entre la dimension transversale D de la portion aval 2 et la dimension transversale d de la portion amont 1 est égal à deux. Le bouchon 3 peut être situé au niveau ou à proximité de la jonction entre les deux portions 1, 2.

La jonction entre les deux portions 1, 2 adjacentes forme de préférence une discontinuité dans les dimensions transversales du canal 1, 2.

Cet élargissement brusque du canal provoque ainsi une focalisation des ondes de chocs, qui mélange le gaz avec de l'air en le portant à une température suffisante pour provoquer l'auto inflammation du prémélange gaz-air.

Par ailleurs, le rapport L/D entre la longueur L de la portion aval 2 et la dimension transversale D de cette portion aval 2 est compris entre 15 et 100.

Le rapport L/D entre la longueur L de la portion aval 2 et la dimension transversale D de cette portion aval 2 est par exemple compris entre 20 et 60 et de préférence entre 38 et 42 et encore plus préférentiellement de l'ordre de 40.

Les dimensions transversales respectives d, D des portions 1, 2 du canal sont par exemple les diamètres ou les diamètres moyens respectifs desdites portions 1, 2. En particulier, lorsque les portions 1, 2 du canal sont cylindriques, les dimensions transversales d, D respectives sont les diamètres considérés.

Une telle configuration favorise notamment l'inflammation spontanée du gaz l'hydrogène ou d'un mélange comprenant de l'hydrogène.

Pour favoriser plus encore l'inflammation spontanée, il est possible de remplacer au moins une partie de l'air contenu dans la portion aval 2 par de l'oxygène ou de l'air enrichi en oxygène. Par exemple, la portion 2 aval peut être scellée par une ou des membranes étanches pour confiner de l'oxygène. En cas d'activation (ouverture du bouchon 3), la membrane est rompue et libère l'oxygène qui se mélange au gaz inflammable libéré. L'oxygène agit alors comme un activateur de l'inflammation de l'hydrogène (ou autre gaz). De cette façon, il est possible de réduire encore le temps d'inflammation spontané du gaz libéré (ce temps d'inflammation peut ainsi être réduit notamment d'un facteur pouvant aller jusqu'à dix).

Lorsque le gaz inflammable est libéré, il est également possible d'utiliser la vitesse d'écoulement du gaz pour créer de l'entraînement d'air A pour former un pré-mélange (G+A) dans le dispositif. Pour cela, et comme illustré schématiquement à la figure 2, des orifices 4 communiquant avec l'atmosphère peuvent être prévus dans la portion aval 2 du canal. L'écoulement de l'air A aspiré dans la portion aval 2 est symbolisé par des flèches. La création d'une flamme 8 est favorisée.

De même, dans le cas où l'on souhaite raccourcir la taille de la flamme générée, il est possible d'envisager un système assurant une rotation du gaz G (ou de l'air A) autour de l'axe longitudinal d'écoulement. Par exemple, des ailettes peuvent donner un mouvement de rotation au gaz G ou au mélange G+A afin de favoriser le mélange et raccourcir la flamme.

La figure 3 illustre un exemple non limitatif de structure possible pour le canal d'écoulement du gaz. Le canal d'écoulement 1, 2 de gaz peut ainsi être formé de deux pièces tubulaires 5, 6 qui peuvent être assemblées de façon amovible (par vis par exemple). La portion 1 amont et éventuellement une partie de la portion aval 2 peuvent être formées dans une première tubulure 5. La portion aval 2 pouvant être formée dans une seconde tubulure 6.

Par exemple, la portion amont 1 peut être cylindrique et posséder un diamètre d compris entre 0,1 et 15mm et de préférence entre 2,2 et 10mmm et encore plus préférentiellement égal à 5mm. La portion aval 2 est de préférence cylindrique et peut posséder un diamètre D compris entre 3 et 50mm et de préférence entre 5 et 15mm et encore plus préférentiellement égal à 10mm. De préférence, la portion aval 2 a une longueur comprise entre 100 et 300 mm. Dans cette configuration, pour des pressions de gaz, notamment d'hydrogène, comprises entre 200 et 700 bar, l'inflammation spontanée est plus favorisée que selon l'art antérieur.

## Revendications

1. Dispositif de sécurité formant une soupape de libération d'un gaz sous pression en cas de situation dangereuse, comprenant un corps définissant un canal (1, 2) d'écoulement de gaz s'étendant selon une direction longitudinale entre une première extrémité amont (11) destinée à être mise en contact avec une source de gaz (G) sous pression et une seconde extrémité aval (12) destinée à être mis en contact avec l'atmosphère extérieure, le dispositif comprenant un bouchon (3) situé sur le canal (1, 2) pour empêcher l'écoulement du gaz entre l'extrémité amont (11) et l'extrémité aval (12) en situation normale, le bouchon (3) étant conformé pour libérer le passage pour le gaz en cas de situation dangereuse lorsqu'il est soumis à un pression et/ou une température excédant un seuil déterminé, **caractérisé en ce que**, d'amont en aval, le canal (1, 2) comprend deux portions d'écoulement adjacentes respectivement amont et aval dont les dimensions transversales respectives (d, D) sont différentes, le rapport D/d entre la dimension transversale D de la portion aval (2) et la dimension transversale d de la portion amont (1) étant compris entre 1,4 et 11; et **en ce que** la jonction entre les deux portions (1, 2) adjacentes forme une discontinuité dans la dimension transversale du canal (1, 2) et **en ce que** le rapport L/D entre la longueur L de la portion aval (2) et la dimension transversale D de cette portion aval (2) est compris entre 15 et 100.

2. Dispositif selon la revendication 1 **caractérisé en ce que** le rapport D/d entre la dimension transversale D de la portion aval (2) et la dimension transversale de la portion amont (1) est compris entre 1,5 et 10, et de préférence compris entre 1,8 et 2,2.

3. Dispositif selon la revendication 1 ou 2 **caractérisé en ce que** le rapport L/D entre la longueur L de la portion aval (2) et la dimension transversale D de cette seconde portion aval (2) est compris entre 20 et 60 et de préférence entre 38 et 42.

4. Dispositif selon l'une quelconque des revendications 1 à 3 **caractérisé en ce que** l'extrémité amont (11) de la portion (1) amont est destinée à être mise en contact avec une source de gaz (G) sous pression.

5. Dispositif selon l'une quelconque des revendications 1 à 4 **caractérisé en ce que** l'extrémité aval (12) de la portion (2) aval est destinée à être mis en contact avec l'atmosphère.

6. Dispositif selon l'une quelconque des revendications 1 à 5 **caractérisé en ce que** les dimensions transversales respectives (d, D) des deux portions (1, 2) sont les diamètres ou les diamètres moyens respectifs desdites portions (1, 2).

7. Dispositif selon l'une quelconque des revendications 1 à 6 **caractérisé en ce qu'**au moins une partie de la portion aval (2) comporte une réserve de gaz enrichi en oxygène par rapport à l'atmosphère, ladite réserve étant maintenue dans la portion aval (2) par au moins un organe de maintien tel qu'une membrane ; l'organe de maintien étant conformé pour libérer le passage pour le gaz et permettre le mélange avec le gaz enrichi de la réserve lorsqu'il est soumis à un pression et/ou une température excédant un seuil déterminé.

8. Dispositif selon l'une quelconque des revendications 1 à 7 **caractérisé en ce que** la portion aval (2) comporte, en amont de l'extrémité aval (12), au moins un orifice (4) assurant une communication entre la portion aval (2) et l'atmosphère extérieur, pour former un système d'aspiration spontané d'air (A) en cas de circulation de gaz (G) sous pression provenant d'une source.

9. Dispositif selon l'une quelconque des revendications 1 à 8 **caractérisé en ce que** le corps définissant le canal (1, 2) est formé d'aux moins deux pièces (5, 6) détachables.

10. Récipient de gaz sous pression, notamment de gaz inflammable contenant de l'hydrogène, **caractérisé en ce qu'**il comporte au moins un dispositif de sécurité conforme à l'une quelconque des revendications 1 à 9.

## Patentansprüche

1. Sicherheitsvorrichtung, die ein Ventil zur Freisetzung eines unter Druck stehenden Gases im Fall einer gefährlichen Situation bildet, wobei die Sicherheitsvorrichtung einen Körper umfasst, der einen Gasströmungskanal (1, 2), der sich gemäß einer Längsrichtung zwischen einem stromaufwärtigen ersten Ende (11), das dazu vorgesehen ist, mit einer Quelle von unter Druck stehendem Gas (G) in Kontakt gebracht zu werden, und einem stromabwärtigen zweiten Ende (12), das dazu vorgesehen ist, mit der Außenatmosphäre in Kontakt gebracht zu werden, erstreckt, wobei die Vorrichtung einen Stopfen (3) umfasst, der sich auf dem Kanal (1, 2) befindet, um das Strömen des Gases zwischen dem stromaufwärtigen Ende (11) und dem stromabwärtigen Ende (12) in einer normalen Situation zu verhindern, wobei der Stopfen (3) dazu eingerichtet ist, den Durchtritt für das Gas im Fall einer gefährlichen Situation freizugeben, wenn es einem Druck und/oder einer Temperatur unterworfen ist, der bzw. die einen bestimmten Grenzwert übersteigt, **dadurch gekennzeichnet, dass** der Kanal (1, 2) von stromaufwärts zu stromabwärts zwei angrenzende, Strömungsabschnitte umfasst, die stromaufwärts bzw. stromabwärts sind und deren jeweiligen Querabmessungen (d, D) unterschiedlich sind, wobei das Verhältnis D:d zwischen der Querabmessung D des stromabwärtigen Abschnitts (2) und der Querabmessung d des stromaufwärtigen Abschnitts (1) zwischen 1,4 und 11 liegt; und dass die Schnittstelle zwischen den zwei angrenzenden Abschnitten (1, 2) eine Diskontinuität in der Querabmessung des Kanals (1, 2) bildet und dass das Verhältnis L:D zwischen der Länge L des stromabwärtigen Abschnitts (2) und der Querabmessung D dieses stromabwärtigen Abschnitts (2) zwischen 15 und 100 liegt.

2. Vorrichtung nach Anspruch 1, **dadurch gekennzeichnet, dass** das Verhältnis D:d zwischen der Querabmessung D des stromabwärtigen Abschnitts (2) und der Querabmessung des stromaufwärtigen Abschnitts (1) zwischen 1,5 und 10 und vorzugsweise zwischen 1,8 und 2,2 liegt.

3. Vorrichtung nach Anspruch 1 oder 2, **dadurch gekennzeichnet, dass** das Verhältnis L:D zwischen der Länge L des stromabwärtigen Abschnitts (2) und der Querabmessung D dieses stromabwärtigen zweiten Abschnitts (2) zwischen 20 und 60 und vorzugsweise zwischen 38 und 42 liegt.

4. Vorrichtung nach einem der Ansprüche 1 bis 3, **dadurch gekennzeichnet, dass** das stromaufwärtige Ende (11) des stromaufwärtigen Abschnitts (1) dazu vorgesehen ist, mit einer Quelle von unter Druck stehendem Gas (G) in Kontakt gebracht zu werden.

5. Vorrichtung nach einem der Ansprüche 1 bis 4, **dadurch gekennzeichnet, dass** das stromabwärtige Ende (12) des stromabwärtigen Abschnitts (2) dazu vorgesehen ist, mit der Atmosphäre in Kontakt gebracht zu werden.

6. Vorrichtung nach einem der Ansprüche 1 bis 5, **dadurch gekennzeichnet, dass** die jeweiligen Querabmessungen (d, D) der zwei Abschnitte (1, 2) die jeweiligen Durchmesser oder Mitteldurchmesser der Abschnitte (1, 2) sind.

7. Vorrichtung nach einem der Ansprüche 1 bis 6, **dadurch gekennzeichnet, dass** mindestens ein Teil des stromabwärtigen Abschnitts (2) einen Vorrat von Gas aufweist, das in Bezug auf die Atmosphäre mit Sauerstoff angereichert ist, wobei der Vorrat in dem stromabwärtigen Abschnitt (2) durch mindestens ein Halteorgan wie eine Membran gehalten wird; wobei das Halteorgan dazu eingerichtet ist, den Durchtritt für das Gas freizugeben und das Mischen mit dem angereicherten Gas aus dem Vorrat zu ermöglichen, wenn es einem Druck und/oder einer Temperatur unterworfen ist, der bzw. die einen bestimmten Grenzwert übersteigt.

8. Vorrichtung nach einem der Ansprüche 1 bis 7, **dadurch gekennzeichnet, dass** der stromabwärtige Abschnitt (2) stromaufwärts des stromabwärtigen Endes (12) mindestens eine Öffnung (4) aufweist, die eine Verbindung zwischen dem stromabwärtigen Abschnitt (2) und der Außenatmosphäre sicherstellt, um ein System zum spontanen Ansaugen von Luft (A) im Fall einer Zirkulation von unter Druck stehendem Gas (G), das von einer Quelle stammt, zu bilden.

9. Vorrichtung nach einem der Ansprüche 1 bis 8, **dadurch gekennzeichnet, dass** der Körper, der den Kanal (1, 2) abgrenzt, von mindestens zwei abnehmbaren Teilen (5, 6) gebildet wird.

10. Behälter für unter Druck stehendes Gas, insbesondere brennbares Gas, das Wasserstoff enthält, **dadurch gekennzeichnet, dass** er mindestens eine Sicherheitsvorrichtung gemäß einem der Ansprüche 1 bis 9 aufweist.

## Claims

1. Safety device forming a relief valve that releases a pressurised gas in the event of a dangerous situation, comprising a body defining a channel (1, 2) for a flow of gas extending in a longitudinal direction between an upstream first end (11) intended to be placed in contact with a source of pressurised gas (G) and a downstream second end (12) intended to be placed in contact with the external atmosphere, the device comprising a plug (3) situated in the channel (1, 2) to prevent the gas from flowing between the upstream end (11) and the downstream end (12) in a normal situation, the plug (3) being configured to open the passage to the gas in the event of a dangerous situation when subjected to a pressure and/or temperature exceeding a determined threshold, **characterised in that**, from upstream to downstream, the channel (1, 2) comprises two adjacent flow portions, these being an upstream and a downstream flow portion, the respective transverse dimensions (d, D) of which are different, the ratio D/d between the transverse dimension D of the downstream portion (2) and the transverse dimension d of the upstream portion (1) being between 1.4 and 11, and **in that** the junction between the two adjacent portions (1, 2) forms a discontinuity in the transverse dimension of the channel (1, 2), and **in that** the ratio L/D between the length L of the downstream portion (2) and the transverse dimension D of this downstream portion (2) is between 15 and 100.

2. Device according to claim 1, **characterised in that** the ratio D/d between the transverse dimension D of the downstream portion (2) and the transverse dimension of the upstream portion (1) is between 1.5 and 10 and preferably between 1.8 and 2.2.

3. Device according to either claim 1 or claim 2, **characterised in that** the ratio L/D between the length L of the downstream portion (2) and the transverse dimension D of this downstream second portion (2) is between 20 and 60 and preferably between 38 and 42.

4. Device according to any of claims 1 to 3, **characterised in that** the upstream end (11) of the upstream portion (1) is intended to be placed in contact with a source of pressurised gas (G).

5. Device according to any of claims 1 to 4, **characterised in that** the downstream end (12) of the downstream portion (2) is intended to be placed in contact with the atmosphere.

6. Device according to any of claims 1 to 5, **characterised in that** the respective transverse dimensions (d, D) of the two portions (1, 2) are the respective diameters or mean diameters of said portions (1, 2).

7. Device according to any of claims 1 to 6, **characterised in that** at least part of the downstream portion (2) comprises a reserve of gas that is enriched in oxygen with respect to the atmosphere, said reserve being kept in the downstream portion (2) by at least one retaining member such as a membrane, the retaining member being configured to open up the passage to the gas and allow mixing with the enriched gas of the reserve when subjected to a pressure and/or to a temperature exceeding a predetermined threshold.

8. Device according to any of claims 1 to 7, **characterised in that** the downstream portion (2) comprises, upstream of the downstream end (12), at least one orifice (4) providing communication between the downstream portion (2) and the external atmosphere, so as to form a spontaneous air induction system (A) if there is circulation of pressurised gas (G) originating from a source.

9. Device according to any of claims 1 to 8, **characterised in that** the body defining the channel (1, 2) is formed of at least two separable components (5, 6).

10. Container for pressurised gas, in particular flammable gas containing hydrogen, **characterised in that** it comprises at least one safety device according to any of claims 1 to 9.
